# EUROPÄISCHE PATENTSCHRIFT

(11) **EP 3 338 529 B1**
(45) Veröffentlichungstag und Bekanntmachung des Hinweises auf die Patenterteilung: **03.06.2020**
(21) Anmeldenummer: 17186292.3
(22) Anmeldetag: 15.08.2017
(51) Int. Cl.: A01D 41/127, A01D 43/08

(54) **LANDWIRTSCHAFTLICHE ERNTEMASCHINE**
AGRICULTURAL HARVESTER
MOISSONNEUSE

(30) Priorität: 20.12.2016 DE 102016124928
(43) Veröffentlichungstag der Anmeldung: 27.06.2018
(73) Patentinhaber: CLAAS Selbstfahrende Erntemaschinen GmbH, 33428 Harsewinkel (DE)
(72) Erfinder: Judaschke, Stefan, 33775 Versmold (DE); Laumeier, Ludger, 33397 Rietberg (DE)
(74) Vertreter: CLAAS Gruppe

(56) Entgegenhaltungen:
- EP-B1- 1 989 936
- EP-B1- 2 620 051
- WO-A1-2011/006844
- WO-A1-2016/171546
- DE-A1- 10 232 227

## Beschreibung

Die Erfindung betrifft eine landwirtschaftliche Erntemaschine nach dem Oberbegriff des Anspruchs 1.

Aus der EP 1 989 936 B1 ist eine entsprechende Erntemaschine bekannt, die eine Sensoreinrichtung zur Inhaltsstofferfassung von landwirtschaftlichem Erntegut aufweist. Die Sensoreinrichtung verfügt über einen auf Basis der Nahinfrarotspektroskopie arbeitenden Sensor (NIR-Sensor), der in einem von einer Schutzscheibe abgeschlossenen Gehäuse, auch Kontaktkopf genannt, angeordnet ist. Dabei trennt die Schutzscheibe das Gehäuseinnere der Sensoreinrichtung vom Inneren des Förderkanals. Problematisch ist bei dieser Anordnung, dass die Schutzscheibe zwangsläufig durch anhaftendes Erntegut im Laufe der Zeit verschmutzt, so dass aufgrund fehlender Transmission keine zuverlässige optische Messung am Erntegut mehr stattfinden kann bzw. nur die Eigenschaften des an der Scheibe anhaftenden Ernteguts gemessen werden, die nicht mit denen des aktuell vorbeiströmenden Erntegutstroms übereinstimmen müssen. Zur Verbesserung der Messgenauigkeit ist daher bei der bekannten Erntemaschine die Schutzscheibe gegenüber der Wand des Förderkanals etwas zurückgesetzt, um dadurch das Risiko zu verringern, dass Partikel des Ernteguts an der Schutzscheibe anhaften. Zudem ist zwischen der zurückgesetzten Schutzscheibe und der Innenwand des Förderkanals ein Spalt ausgebildet, durch den Fluid in den Förderkanal geleitet wird, wobei das Fluid an der Schutzscheibe vorbeifließen soll, um diese zu reinigen.

Die Problematik einer Verunreinigung der Sensoreinrichtung erhöht sich bei dem Einsatz von Siliermitteln, die der Aufbereitung bzw. Behandlung von Erntegut dienen. So verfügen moderne Feldhäcksler über sogenannte Siliermittelanlagen, die ein säurehaltiges Gemisch in den die Erntemaschine durchlaufenden Erntegutstrom injizieren, um insbesondere den Gärprozess im Silo zu verbessern. Derartige Siliermittelanlagen mischen in der Regel eine Säure mit Wasser in einem guteigenschaftsabhängigen Verhältnis, wobei die Guteigenschaften ggf. mittels NIR-Sensoren bestimmt werden.

Eine entsprechende Zugabe von Siliermittel ist beispielsweise in der EP 2 620 051 B1 beschrieben. Die Zugabe von Siliermittel stromaufwärts der Sensoreinrichtung kann aber eine Verschmutzung, insbesondere ein Zukleben der Schutzscheibe bzw. des Kontaktkopfes, noch begünstigen.

Der vorliegenden Erfindung liegt das Problem zugrunde, die bekannte landwirtschaftliche Erntemaschine derart auszugestalten und weiterzubilden, dass die Sensoreinrichtung auch langfristig eine möglichst hohe Messgenauigkeit gewährleistet.

Das genannte Problem wird bei einer landwirtschaftlichen Erntemaschine, insbesondere einem Feldhäcksler, mit den Merkmalen des Oberbegriffs von Anspruch 1 durch die Merkmale des kennzeichnenden Teils von Anspruch 1 gelöst.

Wesentlich ist dabei die Erkenntnis, dass sich bessere Messergebnisse durch eine optimierte Reinigung der Schutzscheibe bzw. des Kontaktkopfes erzielen lassen. Ein verbesserter Reinigungseffekt wird dadurch erreicht, dass eine Austrittsdüse für ein Reinigungsfluid, insbesondere für Wasser, vorgesehen ist, deren Hauptstrahlrichtung nicht parallel, sondern winkelig zur Oberfläche der Schutzscheibe verläuft.

Mit der Hauptstrahlrichtung ist die Verlaufsrichtung der Mittelachse des austretenden Reinigungsfluidstrahls gemeint. Mit einer winkelig zur Oberfläche der Schutzscheibe verlaufenden Hauptstrahlrichtung wird erreicht, dass das Reinigungsfluid die Schutzscheibe besser erreicht und auch mit einer höheren Kraft auf diese auftreffen kann, was die Reinigungswirkung erhöht. Außerdem kann der Reinigungsfluidstrahl auf diese Weise Partikel aus dem Erntegutstrom mitreißen und ebenfalls gegen die Schutzscheibe führen, was ähnlich einem "Sandstrahleffekt" die Reinigungswirkung weiter verbessern kann. Der vorschlagsgemäßen Lösung liegt also nicht wie im Stand der Technik die Idee zugrunde, die Schutzscheibe möglichst vom Wirkungsbereich bzw. Strömungsbereich des Erntegutstroms zu beabstanden und dadurch das Risiko des Kontakts mit dem Erntegut zu minimieren, sondern es ist im Gegenteil durchaus möglich oder sogar gewünscht, dass die Schutzscheibe mit dem Erntegutstrom in Kontakt kommt. Dies hat auch den zusätzlichen Vorteil, dass der Abstand zwischen dem Sensor und dem zu detektierenden Erntegutstrom minimiert werden kann, wodurch die Messgenauigkeit weiter erhöht werden kann.

Gemäß der Ausgestaltung der landwirtschaftlichen Erntemaschine nach Anspruch 2 handelt es sich bei dem Sensor der Sensoreinrichtung um einen auf Basis der Nahinfrarotspektroskopie oder auf LED-Basis arbeitenden Sensor, insbesondere NIR-Sensor. Grundsätzlich können erfindungsgemäß auch mehrere Sensoren, insbesondere NIR-Sensoren, in dem Gehäuse vorgesehen sein. Ein NIR-Sensor hat sich als besonders vorteilhaft für die Erfassung einer hohen Anzahl für eine Siliermittelzugabe relevanter Inhaltsbestandteile des Ernteguts erwiesen. Insbesondere lassen sich auf diese Weise Zuckergehalt, Proteingehalt, Rohascheanteil und/oder Rohfaseranteil schnell und zuverlässig ermitteln.

Wie zuvor erläutert, weist die Reinigungseinrichtung der vorschlagsgemäßen landwirtschaftlichen Erntemaschine mindestens eine Austrittsdüse für das Reinigungsfluid auf. Dabei kann es sich um genau eine Austrittsdüse oder um eine Mehrzahl von Austrittsdüsen handeln. Sind mehrere Austrittsdüsen vorgesehen, ist insbesondere jeder Austrittsdüse jeweils eine winkelig zur Oberfläche der Schutzscheibe verlaufende Hauptstrahlrichtung zugeordnet. Oder den Austrittsdüsen ist eine gemeinsame Hauptstrahlrichtung zugeordnet, die sich durch Überlagerung der jeweiligen Hauptstrahlrichtungen der einzelnen Austrittsdüsen ergibt.

Die mindestens eine Austrittsdüse ist gemäß der Ausgestaltung der landwirtschaftlichen Erntemaschine nach Anspruch 3 derart angeordnet, dass die Hauptstrahlrichtung auf die Oberfläche der Schutzscheibe gerichtet ist, d. h. die Mittelachse eines aus der Austrittsdüse austretenden Reinigungsfluidstrahls die Oberfläche der Schutzscheibe schneidet. Vorzugsweise ist die mindestens eine Austrittsdüse der Schutzscheibe gegenüberliegend in oder an einer Seitenwand des Förderkanals angeordnet (Anspruch 4).

Idealerweise ist die mindestens eine Austrittsdüse so angeordnet, dass unter Berücksichtigung der Strömungsgeschwindigkeit des Erntegutstroms, der den Reinigungsfluidstrahl etwas umlenken kann, der Reinigungsfluidstrahl dennoch auf die Schutzscheibe trifft.

Bei dem Reinigungsfluidstrahl handelt es sich entweder um einen Vollstrahl oder um einen Sprühstrahl, wobei letzterer insbesondere ein kegelförmiges Sprühmuster bildet. Der Strahl kann um seine Mittelachse zirkulieren oder fix sein, d. h. keine Zirkulation haben.

Gemäß der Ausgestaltung der landwirtschaftlichen Erntemaschine nach Anspruch 6 ist die Schutzscheibe derart angeordnet, dass sie mit dem Erntegutstrom im Förderkanal in Kontakt kommt. Vorzugsweise ist die Schutzscheibe bündig zur Seitenwand des Förderkanals angeordnet. Bündig bedeutet dabei, dass die ins Innere des Förderkanals weisende Scheibenoberfläche in derselben Ebene wie die Innenoberfläche des die Schutzscheibe umgebenden Seitenwandabschnitts verläuft. Grundsätzlich kann die Schutzscheibe auch zumindest abschnittsweise ins Innere des Förderkanals hervorstehen. Gemäß dieser Ausgestaltung wird also bewusst auf einen Abstand bzw. Spalt zwischen Schutzscheibe und Wirkungsbereich (Strömungsbereich) des Erntegutstroms verzichtet, um dadurch den Sensor möglichst nah zum Erntegutstrom anordnen zu können, was wiederum die Messgenauigkeit weiter erhöht. Außerdem wird, gerade in Verbindung mit dem winkeligen Reinigungsfluidstrahl, ermöglicht, dass der Erntegutstrom an der Schutzscheibe anhaftende Partikel abreibt bzw. mitreißt, was die Reinigungswirkung noch verbessert.

Die landwirtschaftliche Erntemaschine weist erfindungsgemäss einen Speicherbehälter für das Reinigungsfluid auf, der in Fluidverbindung mit der mindestens einen Austrittsdüse steht. Es handelt sich bei dem Speicherbehälter um einen Speicherbehälter einer Siliermittelanlage. Die vorschlagsgemäße landwirtschaftliche Erntemaschine weist eine Siliermittelanlage auf, die konfiguriert ist, dem Erntegutstrom stromaufwärts der Schutzscheibe ein Siliermittel zuzugeben.

Der Speicherbehälter ist Bestandteil der Siliermittelanlage, insbesondere einer Siliermittelmischeinrichtung der Siliermittelanlage.

Bei dem Speicherbehälter handelt es sich insbesondere um einen Flüssigkeitstank, insbesondere Wassertank (Anspruch 7). So ist es denkbar, dass in der Siliermittelmischeinrichtung der Siliermittelanlage als Basis für das Siliermittel eine Säure oder ein Siliermittelgranulat mit Wasser aus besagtem Speicherbehälter vermischt wird und dann dem Erntegutstrom zugegeben wird. Derselbe Speicherbehälter dient unabhängig davon dann auch zur Entnahme von Reinigungsfluid, insbesondere Wasser, für die Reinigungseinrichtung.

Die landwirtschaftliche Erntemaschine kann gemäß der Ausgestaltung nach Anspruch 8 auch eine Steuereinrichtung aufweisen, die konfiguriert ist, selektiv entweder das Reinigungsfluid aus der mindestens einen Austrittsdüse in den Förderkanal zu leiten oder das Siliermittel dem Erntegutstrom zuzugeben. Die Steuereinrichtung ermöglicht also in diesem Fall, dass nur dann Reinigungsfluid aus der mindestens einen Austrittsdüse in den Förderkanal austritt, wenn dem Erntegutstrom gleichzeitig kein Siliermittel zugegeben wird, die Siliermittelzufuhr also unterbrochen bzw. abgeschaltet ist. Auch kann die Steuereinrichtung konfiguriert sein, das Reinigungsfluid aus der mindestens einen Austrittsdüse nur dann in den Förderkanal zu leiten, wenn kein Erntegutstrom durch den Abschnitt des Förderkanals zwischen Schutzscheibe und Austrittsdüse, das heißt durch den Wirkungsbereich der Austrittsdüse, und insbesondere durch den gesamten Förderkanal strömt. Vorteil ist, dass das eingestellte guteigenschaftsabhängige Verhältnis von Wasser zu Säure bzw. Siliermittelgranulat nicht durch eine zusätzliche reinigungsbedingte Zugabe von Wasser ungünstig verändert wird. Grundsätzlich ist es auch denkbar, dass die Steuereinrichtung konfiguriert ist, die Menge und/oder das Mischungsverhältnis des dem Erntegutstrom zuzugebenden Siliermittels abhängig von der Menge des von der mindestens einen Austrittsdüse in den Förderkanal austretenden Reinigungsfluids einzustellen bzw. zu regeln.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Erntemaschine gemäß der vorliegenden Erfindung während des Durchfahrens eines Feldbestands und
- Fig. 2: eine Detailansicht eines Teils der Erntemaschine mit einer Sensoreinrichtung und einer Reinigungseinrichtung.

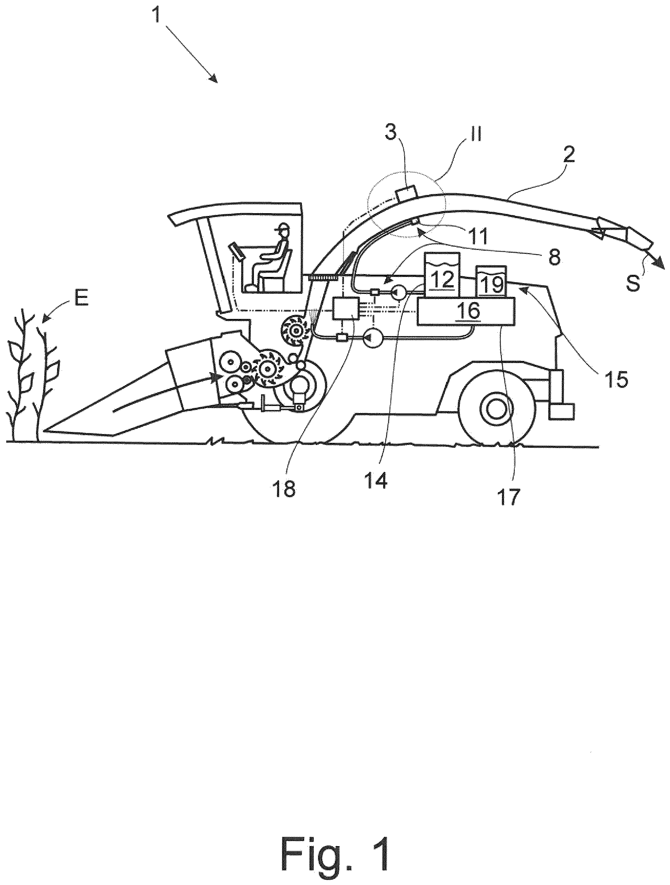

Fig. 1 zeigt eine schematische Seitenansicht einer landwirtschaftlichen Erntemaschine 1 in Form eines Feldhäckslers während der Durchfahrt durch einen Erntegut E aufweisenden Feldbestand. Das Erntegut E wird frontseitig von der landwirtschaftlichen Erntemaschine 1 aufgenommen und dann vorzugsweise mehrfach zerkleinert. Dadurch wird ein Erntegutstrom S erzeugt, der im weiteren Verlauf durch einen Förderkanal 2 geleitet wird.

An dem Förderkanal 2 bzw. an einer Seitenwand 9 des Förderkanals 2 ist eine Sensoreinrichtung 3 zur Erfassung von Inhaltsstoffen und/oder Eigenschaften des Erntegutstroms S angeordnet. Die Sensoreinrichtung 3 weist ein Gehäuse 4, eine das Gehäuse 4 zum Inneren des Förderkanals 2 abschließende Schutzscheibe 5 und einen in dem durch das Gehäuse 4 und die Schutzscheibe 5 gebildeten Raum 6 angeordneten Sensor 7 auf. Bei dem Sensor 7 handelt es sich hier und vorzugsweise um einen NIR-Sensor.

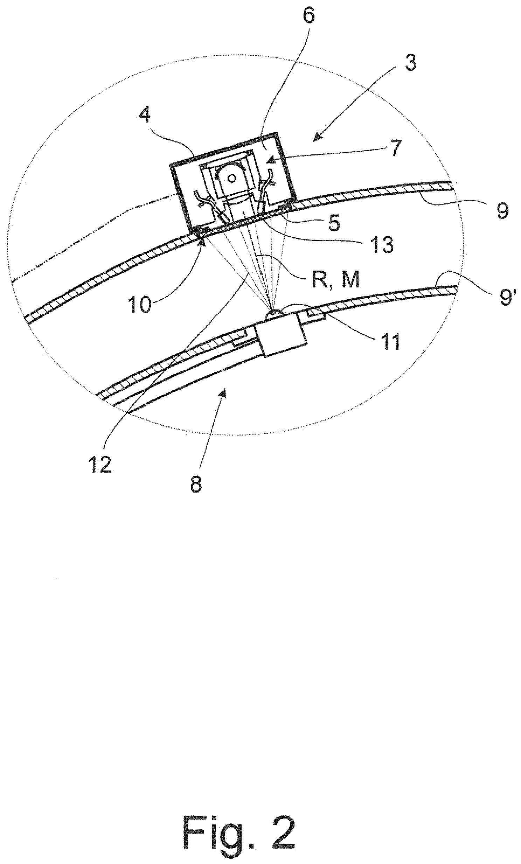

Ferner verfügt die landwirtschaftliche Erntemaschine 1 über eine Reinigungseinrichtung 8, die zur Reinigung der Schutzscheibe 5 konfiguriert ist. Die Reinigungseinrichtung 8 und die Sensoreinrichtung 3 sind in Fig. 2 im Detail schematisch dargestellt.

Die Reinigungseinrichtung 8 weist hier und vorzugsweise eine Austrittsdüse 11 für ein Reinigungsfluid 12, hier Wasser, auf, wobei die Hauptstrahlrichtung R der Austrittsdüse 11 winkelig zur Oberfläche 13 der Schutzscheibe 5 verläuft und auf die Schutzscheibe 5 gerichtet ist. Die Hauptstrahlrichtung R verläuft hier senkrecht zur Oberfläche 13 der Schutzscheibe 5.

Die Schutzscheibe 5 liegt der Austrittsdüse 11 gegenüber, d. h. die Austrittsdüse 11 ist einer Seitenwand 9' und die Sensoreinrichtung 3 einer gegenüberliegenden Seitenwand 9 des Förderkanals 2 zugeordnet. Dabei befindet sich die Schutzscheibe 5 in einer im Förderkanal 2 ausgebildeten Öffnung 10, an der der Erntegutstrom S im Betrieb vorbeigeführt wird. Die Schutzscheibe 5 ist dabei bündig zur Seitenwand 9 des Förderkanals 2 angeordnet, so dass der Erntegutstrom S mit der Schutzscheibe 5 in Kontakt kommt.

Wie in Fig. 2 zu erkennen ist, ist die Austrittsdüse 11 hier und vorzugsweise konfiguriert, einen kegelförmigen Sprühstrahl zu erzeugen, wobei die Mittelachse M des Sprühstrahls koaxial zur Hauptstrahlrichtung R liegt.

In Fig. 1 ist ferner dargestellt, dass die landwirtschaftliche Erntemaschine 1 eine Siliermittelanlage 15 aufweist, die konfiguriert ist, dem Erntegutstrom S stromaufwärts der Schutzscheibe 5 ein Siliermittel 16 zuzugeben. Dazu weist die Siliermittelanlage 15 eine Siliermittelmischeinrichtung 17 auf, die einen Speicherbehälter 14 für Wasser aufweist, der gleichzeitig auch mit der Austrittsdüse 11 der Reinigungseinrichtung 8 in Fluidverbindung steht. Das Siliermittel 16 wird auf Basis einer Säure 19 oder eines Granulats und unter Verwendung desselben Fluids 12, das auch als Reinigungsfluid dient, hergestellt und in den Erntegutstrom S injiziert.

Schließlich weist die hier beispielhaft beschriebene landwirtschaftliche Erntemaschine 1 auch eine Steuereinrichtung 18 auf, die konfiguriert ist, selektiv entweder das Reinigungsfluid 12 aus der Austrittsdüse 11 in den Förderkanal 2 zu leiten oder das Siliermittel 16 dem Erntegutstrom S zuzugeben. Grundsätzlich kann die Steuereinrichtung 18 auch die Menge und/oder das Mischungsverhältnis des dem Erntegutstrom S zuzugebenden Siliermittels 16 abhängig von der Menge des von der Austrittsdüse 11 in den Förderkanal 2 austretenden Reinigungsfluids 12 einstellen.

### Bezugszeichenliste

- 1: landwirtschaftliche Erntemaschine
- 2: Förderkanal
- 3: Sensoreinrichtung
- 4: Gehäuse
- 5: Schutzscheibe
- 6: Raum
- 7: Sensor
- 8: Reinigungseinrichtung
- 9, 9': Seitenwand
- 10: Öffnung
- 11: Austrittsdüse
- 12: Reinigungsfluid
- 13: Oberfläche der Schutzscheibe
- 14: Speicherbehälter
- 15: Siliermittelanlage
- 16: Siliermittel
- 17: Siliermittelmischeinrichtung
- 18: Steuereinrichtung
- 19: Säure
- S: Erntegutstrom
- E: Erntegut
- R: Hauptstrahlrichtung
- M: Mittelachse

## Patentansprüche

1. Landwirtschaftliche Erntemaschine (1), insbesondere Feldhäcksler, mit einem Förderkanal (2) für einen Erntegutstrom (S), mit einer Sensoreinrichtung (3) zur Erfassung von Inhaltsstoffen und/oder Eigenschaften des Erntegutstroms (S), welche ein Gehäuse (4), eine das Gehäuse (4) zum Inneren des Förderkanals (2) abschließende Schutzscheibe (5) und einen in dem durch das Gehäuse (4) und die Schutzscheibe (5) gebildeten Raum (6) angeordneten Sensor (7) aufweist, und mit einer Reinigungseinrichtung (8), die konfiguriert ist zur Reinigung der Schutzscheibe (5), wobei die Sensoreinrichtung (3) einer in einer Seitenwand (9) des Förderkanals (2) ausgebildeten Öffnung (10) zugeordnet ist und der Erntegutstrom (S) in dem Förderkanal (2) an der Schutzscheibe (5) vorbeiführbar ist und wobei die Reinigungseinrichtung (8) mindestens eine Austrittsdüse (11) für ein Reinigungsfluid (12) aufweist, **dadurch gekennzeichnet, dass**
die Hauptstrahlrichtung (R) der mindestens einen Austrittsdüse (11) winkelig zur Oberfläche (13) der Schutzscheibe (5) verläuft, dass die Erntemaschine eine Siliermittelanlage (15) aufweist, die konfiguriert ist, dem Erntegutstrom (S) stromaufwärts der Schutzscheibe (5) ein Siliermittel (16) zuzugeben und dass das Reinigungsfluid (12) von einem Speicherbehälter (14) aufgenommen wird, der in Fluidverbindung mit der mindestens einen Austrittsdüse (11) steht und der Speicherbehälter (14) Bestandteil der Siliermittelanlage (15), insbesondere einer Siliermittelmischeinrichtung (17) der Siliermittelanlage (15) ist.

2. Landwirtschaftliche Erntemaschine (1) nach Anspruch 1, **dadurch gekennzeichnet, dass** der Sensor (7) ein auf Basis der Nahinfrarotspektroskopie oder auf LED-Basis arbeitender Sensor (7) ist.

3. Landwirtschaftliche Erntemaschine (1) nach Anspruch 1 oder 2, **dadurch gekennzeichnet, dass** die mindestens eine Austrittsdüse (11) derart angeordnet ist, dass die Hauptstrahlrichtung (R) auf die Oberfläche (13) der Schutzscheibe (5) gerichtet ist.

4. Landwirtschaftliche Erntemaschine (1) nach einem der vorhergehenden Ansprüche, **dadurch gekennzeichnet, dass** die mindestens eine Austrittsdüse (11) der Schutzscheibe (5) gegenüberliegend in oder an einer Seitenwand (9, 9') angeordnet ist.

5. Landwirtschaftliche Erntemaschine (1) nach einem der vorhergehenden Ansprüche, **dadurch gekennzeichnet, dass** die mindestens eine Austrittsdüse (11) konfiguriert ist, einen Vollstrahl oder einen Sprühstrahl zu erzeugen.

6. Landwirtschaftliche Erntemaschine (1) nach einem der vorhergehenden Ansprüche, **dadurch gekennzeichnet, dass** die Schutzscheibe (5) derart angeordnet ist, dass sie mit dem Erntegutstrom (S) im Förderkanal (2) in Kontakt kommt, vorzugsweise, dass die Schutzscheibe (5) bündig zur Seitenwand (9) des Förderkanals (2) angeordnet ist oder zumindest abschnittsweise ins Innere des Förderkanals (2) hervorsteht.

7. Landwirtschaftliche Erntemaschine (1) nach Anspruch 1, **dadurch gekennzeichnet, dass** der Speicherbehälter (14) ein Flüssigkeitstank, insbesondere Wassertank, ist.

8. Landwirtschaftliche Erntemaschine (1) nach Anspruch 1, **dadurch gekennzeichnet, dass** sie eine Steuereinrichtung (18) aufweist, die konfiguriert ist,
- selektiv entweder das Reinigungsfluid (12) aus der mindestens einen Austrittsdüse (11) in den Förderkanal (2) zu leiten oder das Siliermittel (16) dem Erntegutstrom (S) zuzugeben und/oder
- das Reinigungsfluid (12) aus der mindestens einen Austrittsdüse (11) nur dann in den Förderkanal (2) zu leiten, wenn kein Erntegutstrom (S) durch den Abschnitt des Förderkanals (2) zwischen Schutzscheibe (5) und Austrittsdüse (11) und insbesondere durch den gesamten Förderkanal (2) strömt, und/oder
- die Menge und/oder das Mischungsverhältnis des dem Erntegutstrom (S) zuzugebenden Siliermittels (16) abhängig von der Menge des aus der mindestens einen Austrittsdüse (11) in den Förderkanal (2) austretenden Reinigungsfluids (12) einzustellen.

## Claims

1. An agricultural harvester (1), in particular a forage harvester, comprising a conveyor passage (2) for a flow (S) of crop material, a sensor device (3) for detecting contents and/or properties of the crop material flow (S), which has a housing (4), a protective panel (5) closing off the housing (4) relative to the interior of the conveyor passage (2), and a sensor (7) arranged in the space (6) formed by the housing (4) and the protective panel (5), and a cleaning device (8) configured to clean the protective panel (5), wherein the sensor device (3) is associated with an opening (10) in a side wall (9) of the conveyor passage (2) and the crop material flow (S) in the conveyor passage (2) can be guided past the protective panel (5) and wherein the cleaning device (8) has at least one outlet nozzle (11) for a cleaning fluid (12), **characterised in that** the main jet direction (R) of the at least one outlet nozzle (11) extends at an angle relative to the surface (13) of the protective panel (5), the harvester has a silage means installation (15) configured to add a silage means (16) to the crop material flow (S) upstream of the protective panel (5), and the cleaning fluid (12) is accommodated by a storage container (14) which is in fluid communication with the at least one outlet nozzle (11) and the storage container (14) is a component part of the silage means installation (15), in particular a silage mixing device (17) of the silage means installation (15).

2. An agricultural harvester (1) according to claim 1 **characterised in that** the sensor (7) is a sensor operating on the basis of near infrared spectroscopy or on an LED basis.

3. An agricultural harvester (1) according to claim 1 or claim 2 **characterised in that** the at least one outlet nozzle (11) is so arranged that the main jet direction (R) is directed on to the surface (13) of the protective panel (5).

4. An agricultural harvester (1) according to one of the preceding claims **characterised in that** the at least one outlet nozzle (11) is arranged in opposite relationship to the protective panel (5) in or on a side wall (9, 9').

5. An agricultural harvester (1) according to one of the preceding claims **characterised in that** the at least one outlet nozzle (11) is configured to produce a full jet or a spray jet.

6. An agricultural harvester (1) according to one of the preceding claims **characterised in that** the protective panel (5) is so arranged that it comes into contact with the crop material flow (S) in the conveyor passage (2), and preferably the protective panel (5) is arranged flush with the side wall (9) of the conveyor passage (2) or projects at least portion-wise into the interior of the conveyor passage (2).

7. An agricultural harvester (1) according to claim 1 **characterised in that** the storage container (14) is a liquid tank, in particular a water tank.

8. An agricultural harvester (1) according to claim 1 **characterised in that** it has a control device (18) configured
- selectively either to pass the cleaning fluid (12) out of the at least one outlet nozzle (11) into the conveyor passage (2) or to add the silage means (16) to the crop material flow (S), and/or
- to guide the cleaning fluid (12) out of the at least one outlet nozzle (11) into the conveyor passage (2) only when no crop material flow (S) is flowing through the portion of the conveyor passage (2) between the protective panel (5) and the outlet nozzle (11) and in particular through the entire conveyor passage (2), and/or
- to set the amount and/or the mixing ratio of the silage means (16) to be added to the crop material flow (S) in dependence on the amount of the cleaning fluid (12) issuing from the at least one outlet nozzle (11) into the conveyor passage (2).

## Revendications

1. Machine agricole de récolte (1), en particulier ensileuse, comprenant un canal d'alimentation (2) pour un flux de récolte (S), comprenant un équipement de capteur (3) pour détecter des composants et/ou des propriétés du flux de récolte (S), lequel comporte un boîtier (4), une plaque de protection (5) fermant le boîtier (4) par rapport à l'intérieur du canal d'alimentation (2), et un capteur (7) disposé dans l'espace (6) formé par le boîtier (4) et par la plaque de protection (5), comprenant un équipement de nettoyage (8) qui est configuré pour nettoyer la plaque de protection (5), l'équipement de capteur (3) étant associé à une ouverture (10) ménagée dans une paroi latérale (9) du canal d'alimentation (2), et le flux de récolte (S) pouvant être acheminé, dans le canal d'alimentation (2), devant la plaque de protection (5), et l'équipement de nettoyage (8) comportant au moins une buse de sortie (11) pour un fluide de nettoyage (12), **caractérisée en ce que** la direction de jet principale (R) de la au moins une buse de sortie (11) s'étend selon un angle par rapport à la surface (13) de la plaque de protection (5), **en ce que** la machine de récolte comporte une installation d'additif d'ensilage (15) qui est configurée pour ajouter un additif d'ensilage (16) au flux de récolte (S) en amont de la plaque de protection (5), et **en ce que** le fluide de nettoyage (12) est contenu dans un réservoir (14) qui est en liaison fluidique avec la au moins une buse de sortie (11), et le réservoir (14) fait partie de l'installation d'additif d'ensilage (15), en particulier d'un équipement de mélange d'additif d'ensilage (17) de l'installation d'additif d'ensilage (15) .

2. Machine agricole de récolte (1) selon la revendication 1, **caractérisée en ce que** le capteur (7) est un capteur (7) fonctionnant sur la base de la spectroscopie dans l'infrarouge proche ou sur la base de LED.

3. Machine agricole de récolte (1) selon la revendication 1 ou 2, **caractérisée en ce que** la au moins une buse de sortie (11) est disposée de façon que la direction de jet principale (R) soit dirigée vers la surface (13) de la plaque de protection (5).

4. Machine agricole de récolte (1) selon une des revendications précédentes, **caractérisée en ce que** la au moins une buse de sortie (11) est disposée en face de la plaque de protection (5) dans ou sur une paroi latérale (9, 9').

5. Machine agricole de récolte (1) selon une des revendications précédentes, **caractérisée en ce que** la au moins une buse de sortie (11) est configurée pour produire un jet plein ou un jet vaporisé.

6. Machine agricole de récolte (1) selon une des revendications précédentes, **caractérisée en ce que** la plaque de protection (5) est disposée de façon à venir en contact avec le flux de récolte (S) dans le canal d'alimentation (2), de préférence **en ce que** la plaque de protection (5) est disposée à fleur de la paroi latérale (9) du canal d'alimentation (2) ou fait saillie au moins par endroits à l'intérieur du canal d'alimentation (2).

7. Machine agricole de récolte (1) selon la revendication 1, **caractérisée en ce que** le réservoir (14) est une cuve de liquide, en particulier une cuve d'eau.

8. Machine agricole de récolte (1) selon la revendication 1, **caractérisée en ce qu'**elle comporte un équipement de commande (18) qui est configuré
- pour, sélectivement, diriger le fluide de nettoyage (12) depuis la au moins une buse de sortie (11) vers le canal d'alimentation (2) ou pour ajouter l'additif d'ensilage (16) au flux de récolte (S) et/ou
- pour diriger le fluide de nettoyage (12) depuis la au moins une buse de sortie (11) vers le canal d'alimentation (2) uniquement si aucun flux de récolte (S) ne circule dans la portion du canal d'alimentation (2) entre la plaque de protection (5) et la buse de sortie (11) et, en particulier, à travers l'ensemble du canal d'alimentation (2), et/ou
- régler la quantité et/ou le rapport de mélange de l'additif d'ensilage (16) à ajouter au flux de récolte (S) en fonction de la quantité de fluide de nettoyage (12) sortant de la au moins une buse de sortie (11) vers le canal d'alimentation (2).
